# EUROPÄISCHE PATENTSCHRIFT

(11) **EP 1 354 885 B1**
(45) Veröffentlichungstag und Bekanntmachung des Hinweises auf die Patenterteilung: **26.10.2005**
(21) Anmeldenummer: 03007734.1
(22) Anmeldetag: 04.04.2003
(51) Int. Cl.: C07F 9/12

(54) **Flammschutzmittel für Polymere enthaltend eine Mischung aus zwei verschiedenen Arylphosphaten, deren Herstellung und deren Verwendung**
Flame retardants for polymers comprising a mixture of two different aryl phoaphates, their preparation and use thereof
Compositions ignifuges pour des polymères contenant un mélange de deux phosphates d'aryl différentes, leur préparation et utilisation

(30) Priorität: 16.04.2002 DE 10216736
(43) Veröffentlichungstag der Anmeldung: 22.10.2003
(73) Patentinhaber: LANXESS Deutschland GmbH, 51369 Leverkusen (DE)
(72) Erfinder: Janke, Nikolaus, Dr., 41539 Dormagen (DE); Mauerer, Otto, 42799 Leichlingen (DE); Pieroth, Manfred, Dr., 51069 Köln (DE)

(56) Entgegenhaltungen:
- EP-A- 0 509 506
- EP-A- 0 640 655
- EP-A- 0 662 495
- WO-A-02/08329
- US-A- 5 278 212
- US-A- 5 728 859
- US-B1- 6 403 819

## Beschreibung

Die vorliegende Erfindung betrifft ein neues Flammschutzmittel-System für Polymere enthaltend eine Mischung aus zwei verschiedenen Arylphosphaten, dessen Herstellung sowie dessen Verwendung.

Viele Polymere müssen aufgrund ihrer guten Brennbarkeit flammhemmend ausgerüstet werden. Eine Möglichkeit zur Erhöhung der Flammwidrigkeit von Polymeren ist die Zugabe nicht brennbarer oder schwer brennbarer Füllstoffe wie Glas, Quarzmehl, Wollastonit usw. (zu Polymeren). Eine weitere Möglichkeit ist der Einsatz anorganischer Flammschutzmittel. Als Beispiele seien Borverbindungen und Metallhydroxide genannt. Für einen ausreichenden Flammschutz sind aber hohe Einsatzmengen derartiger Flammschutzmittel erforderlich. Dies führt zu großen Problemen bei der Herstellung und Verarbeitung von Polymeren.

Sehr weit verbreitet ist der Einsatz halogenierter Verbindungen, wie zum Beispiel Tetrabrombisphenol A, oder das entsprechende Bisepoxid daraus, Decabromdiphenylether bzw. bromierte Polystyrole. Die Verwendung halogenierter Flammschutzmittel ist jedoch umstritten. Bei der Verbrennung entstehen korrosive Gase wie Chlorwasserstoff oder Bromwasserstoff. Es besteht auch die Möglichkeit der Bildung stark toxischer, dioxinähnlicher Produkte.

Aus US-A-3 689 602, US-A-3 192 242, GB-A-1 487 609 und EP-A-465 605 ist die Verwendung von halogenhaltigen und auch halogenfreien Phosphaten als Flammhemmer für Polymere bekannt. Allerdings haben phosphororganische Verbindungen, die nicht in die Polymermatrix eingebaut werden, weichmachende Eigenschaften. Da solche Phosphorverbindungen, um eine wirksame Flammwidrigkeit zu erreichen, in großen Mengen zugegeben werden müssen, beeinträchtigen sie die mechanischen und elektrischen Eigenschaften der Polymere für viele Anwendungen in einem unzumutbaren Maß.

So werden z.B. die Festigkeitswerte bzw. der Glaspunkt erniedrigt. Manche dieser Verbindungen sind darüber hinaus thermisch instabil oder auch hydrolyseinstabil. Darüber hinaus sind die halogenhaltigen Phosphate, wie zuvor schon erwähnt, aus ökologischer Sicht umstritten.

Es ist bekannt, dass die Verwendung von bestimmten funktionelle Gruppen enthaltenden Arylphosphaten oder Arylthiophosphaten eine Erhöhung der Flammwidrigkeit von Polymeren, insbesondere Harzen, wie Epoxidharzen, bewirkt, ohne deren thermische und mechanische Eigenschaften im wesentlichen zu beeinträchtigen.

Aus DE-A-44 00 441 ist die alleinige Verwendung der funktionelle Gruppen enthaltenden Arylphosphate (nachfolgend "Arylphosphate Typ I" benannt) bereits bekannt. Die Verwendung von Arylphosphaten als Flammschutzmittel für Polymere gemäß DE-A-44 00 441 galt es jedoch nachzuverbessern. Solche Arylphosphate konnten z.B. eine Brandprüfung gemäß UL 94-Standard nie bestehen. Ferner waren Glasübergangstemperaturen von über 150°C in der Regel mit einer Kombination aus Arylphosphaten Typ I und einem weiteren Aminhärter erreicht. Harze, die allein dieses Arylphosphat enthalten, erweichen im allgemeinen ab 130 bis 140°C. Diese Temperaturen sind für eine Verwendung in Elektrogeräten sowie in gedruckten Schaltungen (sogenannte printed circuit boards) zu niedrig. Ein weiterer Nachteil von DE-A-44 00 441 ist der, dass die darin beschriebenen Arylphosphate die Polymere verfärben.

Der Erfindung lag die Aufgabe zugrunde, ein Flammschutzmittel für Polymere bereitzustellen, das wenigstens eine der Eigenschaften, hohe Glaspunkte, und/oder deutlich geringere Verfärbung/Vergilbung und/oder einen sehr hohen für die Flammwidrigkeit erforderlichen Phosphorgehalt aufweist, das in Polymeren und insbesondere in Epoxidharzen Verwendung findet.

Die Erfindung betrifft eine Mischung enthaltend Arylphosphate Typ I der allgemeinen Formel (I) 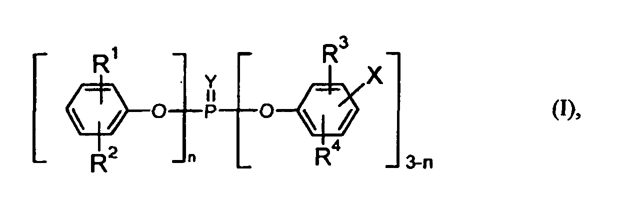 worin
- R¹ bis R⁴: für Wasserstoff stehen,
- Y: Sauerstoff oder Schwefel bedeutet,
- X: NH₂ bedeutet,
und
- n: für 0, 1 oder 2 steht, und

Arylphosphate Typ II der allgemeinen Formel (II) 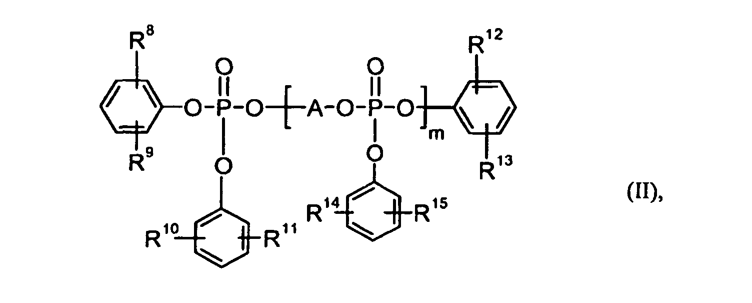 worin
- R⁸ bis R¹⁵: unabhängig voneinander für Wasserstoff, Alkyl, Cycloalkyl, Alkenyl, Aralkyl oder Aryl stehen, wo das Aryl gegebenenfalls mit Alkyl substituiert sein kann,
- m: für 0, 1, 2 oder 3 steht, und
- A: für Aromaten, die mindestens zwei funktionelle Gruppen enthalten, steht.

Für die Arylphosphate Typ II kommen als Alkylreste R⁸ bis R¹⁵ insbesondere solche mit 1 bis 20, bevorzugt 1 bis 6, besonders bevorzugt 1 bis 4 Kohlenstoffatomen in Frage. Die Cycloalkylreste besitzen vorzugsweise 5 bis 8, insbesondere 5 oder 6 Ringkohlenstoffatome, der Alkenylrest kann linear oder verzweigt sein und 2 bis 12, bevorzugt 2 bis 6 Kohlenstoffatome enthalten. Als Aralkylgruppen sind solche bevorzugt, die 7 bis 12 Kohlenstoffatome enthalten. Als Arylreste kommen vorzugsweise solche in Frage, die mit C₁-C₄-Alkylresten substituiert sind und 6 bis 14 Ringkohlenstoffatome besitzen. Die Arylreste können auch unsubstituiert sein.

Als Beispiele für die Reste R⁸ bis R¹⁵ der vorstehenden Formel werden genannt: Methyl, Ethyl, Propyl, Isopropyl, n-Butyl, i-Butyl, t-Butyl, Pentyl, Hexyl, Octyl, Dodecyl, Tetradecyl, Eicosyl, Cyclopentyl, Cyclohexyl, Methylcyclohexyl, Vinyl, Prop-1-enyl, Prop-2-enyl, n-But-3-enyl, n-Pent-4-enyl, n-Hex-5-enyl, Phenyl, Naphthyl, Biphenyl, Benzyl, Methylbenzyl, Phenylethyl.

Die Arylphosphate Typ II können unverbrückt sein, hierbei steht m vorzugsweise für 0. Bevorzugt sind die Arylphosphate Typ II verbrückt, wobei m für 1, 2 oder 3 steht. Beispiele von unverbrückten Arylphosphaten Typ II sind Triphenylphosphat und Alkylphenylphosphate.

Bevorzugt wird als A ein Rest, der in Form von A(OH)₂ der Verbindung Bisphenol-A oder Resorcin entspricht.

Ganz besonders bevorzugt sind Arylphosphate Typ II, bei denen R⁸ bis R¹⁵ für Methyl und A für ein Rest steht, der in Form von A(OH)₂ Bisphenol-A entspricht.

Die Verbindungen sind teilweise bekannt oder können nach bekannten Methoden hergestellt werden. Eine Möglichkeit zur Herstellung der Arylphosphate Typ I ist die Umesterung eines entsprechenden Triarylphosphates mit den entsprechenden Phenolen im geeigneten molaren Verhältnis unter basischer Katalyse (Houben-Weyl, Methoden der organischen Chemie, Band 12/2, S. 371 ff, Georg Thieme Verlag, Stuttgart, 1964).

Die Arylphosphate Typ II, wie z.B. Diphenylkresylphosphat oder Bisphenol A bis-(diphenyl)-phosphat sind zum Teil als Handelsprodukte unter den Handelsnamen Disflamoll DPK® bzw. Fyrolflex BDP® von Bayer oder Akzo erhältlich. Verbrückte Phosphate, wie z.B. Dixylenyl-bisphenol-A-diphosphat (nachfolgend "Bisphenol-A bis-(dixylenylphosphat)"), können durch Verbrückung von POCl₃ mit mehrfunktionellen Aromaten und Umsetzung geeigneter Phenole hergestellt werden. Eine Herstellung ist z.B. in EP-A-509 506 und EP-A-764 650 beschrieben.

Die Mischung enthält vorzugsweise Arylphosphate Typ I in Mengen von 3 bis 98 Gew.-%, bevorzugt 13 bis 93 Gew.-%, besonders bevorzugt 25 bis 88 Gew.-%, und die Arylphosphate Typ II in Mengen von 2 bis 97 Gew.-%, bevorzugt 7 bis 87 Gew.-%, besonders bevorzugt 12 bis 75 Gew.-%, jeweils bezogen auf die Summe von Arylphosphat Typ I und Arylphosphat Typ II. Vorzugsweise enthält die Mischung 70 bis 100 Gew.-%, besonders bevorzugt 90 bis 100 Gew.-%, ganz besonders bevorzugt 95 bis 100 Gew-% Arylphosphate Typ I und Arylphosphate Typ II bezogen auf die Mischung.

Die Erfindung betrifft weiterhin ein Verfahren zur Herstellung der erfindungsgemäßen Arylphosphat-Mischung, dadurch gekennzeichnet, dass Arylphosphate Typ I der allgemeinen Formel (I) 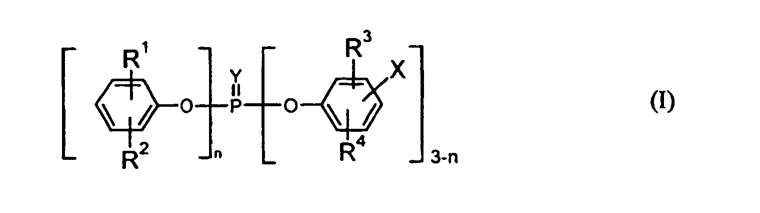 worin R¹ bis R⁴, Y, X und n die oben angegebene Bedeutung haben, und

Arylphosphate Typ II der allgemeinen Formel (II) 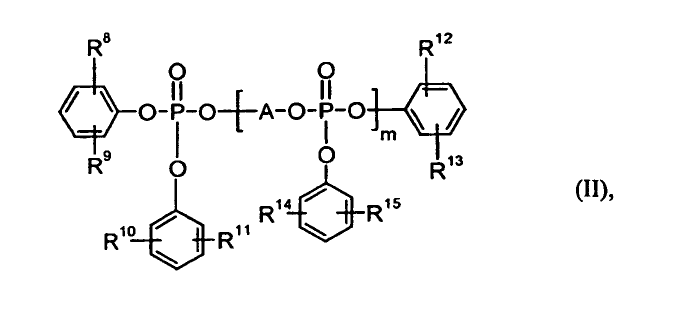 worin R⁸ bis R¹⁵, A und m die oben angegebene Bedeutung haben, gemischt werden.

Die Erfindung betrifft weiterhin ein Verfahren zur Herstellung von mit Flammschutzmitteln ausgerüsteten Polymeren, dadurch gekennzeichnet, dass man entweder die Arylphosphat-Mischung oder die Arylphosphate Typ I und II separat in das Polymer einarbeitet.

Die optimalen Mengen an der erfindungsgemäßen Arylphosphat-Mischung für das Polymer hängen von der Natur der Polymeren und der Art der eingesetzten Arylphosphate des Typs I und II ab und können leicht durch entsprechende Vorversuche ermittelt werden. Die erfindungsgemäße Arylphosphat-Mischung ist im allgemeinen schon bei geringen Zusatzmengen wirksam und beeinflusst daher die thermischen und mechanischen Eigenschaften der flammwidrig auszurüstenden Polymere praktisch nicht.

Die erfindungsgemäße Arylphosphat-Mischung kann je nach Art des verwendeten Polymeren und den gewünschten Eigenschaften in verschiedener physikalischer Form angewendet werden. Sie können beispielsweise zum Erzielen einer besseren Dispersion im Polymeren zu einer feinteiligen Form vermahlt werden. Es ist auch möglich, Gemische der (verschiedenen) erfindungsgemäßen Arylphosphat-Mischung einzusetzen. Die Arylphosphate der Formel I und Arylphosphate der Formal II können ferner in einem geeigneten Lösemittel wie z. B. Butanon gelöst werden, und diese Lösung danach dem Polymeren zugesetzt werden.

Die Arylphosphat-Mischung wird in das Polymer üblicherweise in Mengen von 2 bis 80 Gew.-%, bevorzugt 6 bis 60 Gew.-%, besonders bevorzugt 10 bis 50 Gew.-%, bezogen auf das Polymer, eingearbeitet. Für den Fall einer separaten Zugabe wird Arylphosphat Typ I in das Polymer üblicherweise in Mengen von 1 bis 50 Gew.-%, bevorzugt 3 bis 40 Gew.-%, besonders bevorzugt 5 bis 35 Gew.-%, und das Arylphosphat Typ II vorzugsweise in Mengen von 1 bis 30 Gew.-%, bevorzugt 3 bis 20 Gew.-%, besonders bevorzugt 5 bis 15 Gew.-%, bezogen auf das Polymer, eingearbeitet.

Die Arylphosphat-Mischung bzw. die Arylphosphate Typ I und II separat werden im Allgemeinen bei einer Temperatur von 20°C bis 200°C, bevorzugt von 20°C bis 80°C, in die Polymere eingearbeitet.

Polymere, die mit der erfindungsgemäßen Arylphosphat-Mischung flammwidrig gemacht werden können, sind. z.B.:
1. Polyphenylenoxide und -sulfide sowie Gemische dieser Polymeren mit Polystyrolpfropfpolymeren oder Styrolcopolymeren, wie z.B. hoch schlagfestem Polystyrol, mit EPDM-Copolymeren oder mit Kautschuken, sowie Gemische von Polyphenylenoxiden mit Polyamiden und Polyestern.
2. Polyurethane, die sich von Polyethern, Polyestern oder Polybutadien mit endständigen Hydroxylgruppen einerseits und aliphatischen und aromatischen Polyisocyanaten andererseits ableiten, einschließlich Polyisocyanurate und Vorläufer davon.
3. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, Polyamid 6/10, Polyamid 11, Polyamid 12, Poly-2,4,4-trimethylhexamethylenterephthalamid oder Poly-m-phenylenisophthalamid sowie Copolymere davon mit Polyethern, wie z.B. mit Polyethylenglykolen, Polypropylenglykolen oder Polytetramethy-lenglykolen.
4. Polyester, die sich von Dicarbonsäuren und Dialkoholen und/oder Hydroxycarbonsäuren oder den entsprechenden Lactonen ableiten, wie z.B. Polyethylenterephthalat, Polybutylenterephthalat, Poly-1,4-dimethylol-cyclohexan-terephthalat und Polyhydroxybenzoate sowie Block-Copolyetherester, die sich von Polyethern mit endständigen Hydroxylgruppen ableiten.
5. Ungesättigte Polyester, die sich von Copolyestern aus gesättigten und ungesättigten Dicarbonsäuren und mehrwertigen Alkoholen und Vinylverbindungen als Vernetzungsmittel ableiten.
6. Polystyrol.
7. Pfropfcopolymere von Styrol, wie z.B. Styrol auf Polybutadien, Styrol und Acrylnitril auf Polybutadien, Styrol und Alkylacrylate oder -methacrylate auf Polybutadien, Styrol und Acrylnitril auf Ethylen/Propylen/Dien-Terpolymere, Styrol und Acrylnitril auf Acrylat/Butadien-Copolymere, sowie Gemische davon mit statistischen Copolymeren aus Styrol oder α-Methylstyrol und Dienen oder Acrylsäurederivaten, wie z.B. die als ABS, MBS, ASA bekannten Styrol-Terpolymere.
8. Polycarbonate.
9. Epoxidharze, die sich von Polyepoxiden ableiten, wie z.B. von Diepoxiden, insbesondere Bisphenol A-Diepoxiden, oder von cycloaliphatischen Diepoxiden.
10. Phenol- und Melaminharze sowie deren Blends.

Die mit den erfindungsgemäßen Arylphosphat-Mischungen ausgerüsteten Polymere können noch weitere übliche Zusätze enthalten, wie z.B. Hitzestabilisatoren, Lichtstabilisatoren, UV-Absorber, Antioxidantien, Antistatika, Konservierungsmittel, Haftvermittler, Füllstoffe, Pigmente, Schmierstoffe, Verschäumungsmittel, Fungizide, Weichmacher, Verarbeitungshilfsmittel, weitere flammhemmende Zusätze und Mittel zur Verringerung der Rauchentwicklung. Als weitere flammhemmende Zusätze kommen beispielsweise phosphorhaltige Salze, wie z.B. Ammoniumpolyphosphate, Melamin und Melaminsalze, Antimontrioxid, Aluminiumhydroxid, Wismutphosphat, Molybdänoxid oder Gemische dieser Verbindungen mit Zink- und/oder Magnesiumoxid oder -salzen in Frage.

In einer bevorzugten Aufführungsform des Verfahrens zur Herstellung von mit Flammschutzmittel ausgerüsteten Polymeren, ist das Polymer ein Epoxidharz. Besonders bevorzugt sind Epoxidharze, wie z.B. Bisphenol A-, Bisphenol F-, Phenol- und Kresol-Novolakepoxidharzen (siehe z.B. Houben-Weyl, Methoden der organischen Chemie, Bd. E 20/3, S. 1891 ff, Georg Thieme Verlag, Stuttgart New York, 1987).

Vorteile der erfindungsgemäßen Arylphosphat-Mischung zur Flammschutz-ausrüstung von beispielsweise Epoxidharzen bestehen darin, dass ein sehr hoher, für die Flammwidrigkeit erforderlicher Phosphorgehalt in der Formmasse erzielt werden kann, eine geringere Vergilbung der Formmasse nach dem Aushärten eintritt und dass sie, allein oder gemeinsam mit konventionellen Härtern, für Epoxidharze eingesetzt werden können.

Obwohl jeder der bekannten Härter für Epoxidharze verwendet werden kann, werden Anhydrid- und Aminhärter, wie sie beispielsweise in Houben-Weyl, Methoden der organischen Chemie, Bd. E 20/3, S. 1950 ff, Georg Thieme Verlag, Stuttgart New York, 1987, beschrieben sind, bevorzugt. Als Beispiele für Anhydridhärter werden genannt: Phthalsäureanhydrid, Hexahydrophthalsäureanhydrid, Methyltetrahydrophthalsäureanhydrid, Ethylhexahydrophthalsäureanhydrid und Methylnadicsäure anhydrid. Geeignete Aminhärter sind Dicyandiamid, 4,4'-Diaminodiphenyl-methan, 4,4'-Diamino-diphenyl-sulfon oder BF₃-Monoethylamin-Komplex. Werden die erfindungsgemässen Arylphosphat-Mischungen, zusammen mit den oben genannten konventionellen Härtern eingesetzt, dann enthalten die Epoxidharzen zuzusetzenden Härtermischungen vorzugsweise 10 bis 100 Gew.-%, besonders bevorzugt 50 bis 100 Gew.-% an der erfindungsgemässen Arylphosphat-Mischung und 0 bis 90 Gew.-%, besonders bevorzugt 0 bis 50 Gew.-%, an einem der genannten Anhydrid- und/oder Aminhärter, wobei die Summe der Gew.-%e von der Arylphosphat-Mischung und der Anhydrid und/oder Aminhärter 100 Gew.-% ergeben muss.

Üblicherweise werden bei der Herstellung von mit Flammschutzmitteln ausgerüsteten Polymeren flüssige oder lösliche Polymere, insbesondere Epoxidharze mit der Arylphosphat-Mischung und gegebenenfalls mit den entsprechenden Gewichtsteilen weiterer Härter bzw. Härtergemische, und weiterer Additive (siehe z.B. Tabelle 1) wie z.B. Dicyandiamid 10 gew.-%ig in DMF/Methoxypropylacetat (1:1) und Methylimidazol 20 gew.-%ig in Methanol als Lösung, umgesetzt. Hierzu wird das Harz vorzugsweise vorgelegt und bei Bedarf mit geeigneten Lösemitteln seine Viskosität erniedrigt und sein Lösevermögen für die Additive erhöht. Unter Rühren und bei Bedarf unter leichter Erwärmung auf etwa 20°C bis 70°C im Allgemeinem werden alle Additive zugegeben und homogenisiert. Diese Mischung wird dann im Allgemeinem 5 bis 10 Minuten von 20°C bis 100°C, bevorzugt 40°C bis 80°C unter Rühren entgast und von überschüssigem Lösemittel befreit. Danach wird üblicherweise etwa 1 bis 4 Stunden bei Temperaturen von 60°C bis 160°C, bevorzugt 80°C bis 120°C, besonders bevorzugt 100°C und etwa 1 bis 2 Stunden bei Temperaturen von 140°C bis 200°C, bevorzugt 160 bis 190°C, besonders bevorzugt bei 180°C gehärtet. Alle Arbeiten können z.B. in flachen Alu-Einwegschälchen erfolgen.

Die erfindungsgemäße Arylphosphat-Mischung kann auch dazu verwendet werden ein flammwidriges Prepolymer zu bilden. Dazu wird die erfindungsgemäße Arylphosphat-Mischung unterstöchiometrisch in ein reaktive Gruppen, insbesondere Epoxy- und/oder Isocyanat-Gruppen enthaltendes Polymer eingearbeitet. Der Begriff unterstöchiometrisch bezieht sich dabei auf das Arylphosphat vom Typ I der Mischung. Das gebildete Prepolymer ist folglich unvollständig ausgehärtet und kann als flammwidriges Prepolymer eingesetzt und ausgehärtet werden. Dieses Prepolymer weist einen Vorteil durch verbessertes Handling aufgrund seiner anwendungstechnischen Eigenschaften auf.

Dabei muss der Verarbeiter ein Flammschutzmittel, das möglicherweise spezielle technische oder gewerbehygienische Maßnahmen erfordert, nicht separat kaufen, lagern und handhaben.

Die erfindungsgemäße Arylphosphat-Mischung kann den Polymeren ferner so eingearbeitet werden, um ein sogenanntes flammwidriges Prepolymer zu bilden. Hierzu wird die erfindungsgemäße Arylphosphat-Mischung unterstöchiometrisch in das Polymer eingearbeitet, so dass das Polymer reaktive Gruppen wie Epoxy- oder Isocyanat-Gruppen trägt, die nicht alle mit dem Arylphosphat Typ I reagiert haben und so für eine vollständige Aushärtung übrig bleiben.

Die Herstellung der Arylphosphat-Mischung und ihre Einarbeitung in Polymere, insbesondere Epoxidharze, kann kontinuierlich oder diskontinuierlich erfolgen.

Die Erfindung betrifft weiterhin die Verwendung der Arylphosphat-Mischungen als Flammschutzmittel für Polymere. Als Polymer kann ein Epoxidharz eingesetzt werden.

Die mit den erfindungsgemäßen Arylphosphat-Mischungen ausgerüsteten Epoxidharzmassen können insbesondere als Gieß- und Laminierharze für Umhüllungsmassen und für Leiterplatten im Elektronikbereich eingesetzt werden.

Die Erfindung betrifft weiterhin eine Polymerverbindung, erhältlich durch Umsetzung von Polymeren, insbesondere Epoxyharzen, mit der erfindungsgemäßen Arylphosphat-Mischung oder separat mit einem Arylphosphat der Formel I und einem Arylphosphat der Formel II.

Die Erfindung betrifft weiterhin ein Polymer, enthaltend die erfindungsgemäße Arylphosphat-Mischung.

Die Erfindung wird durch die folgenden Beispiele näher erläutert:

### Beispiel 1

Herstellung eines Aminophenylphosphats (ein Arylphosphat Typ I) mit ca. 8,6 Gew.-% Basen-Stickstoff (nachfolgend als "Aminophenylphosphat-Beispiel 1" bezeichnet; chemische Bezeichnung der Hauptkomponente: Bis(3-aminophenylphenylphosphat).

1.304 g (4,00 mol) Triphenylphosphat und 872 g (8,00 mol) 3-Aminophenol werden unter Stickstoff in einem trockenen 2-1-Vierhalskolben mit Rührer, Thermometer, 40-cm-Vigreuxkolonne mit Destillationskopf, Produktkühler (auf 48°C temperiert) und Vakuumwechselvorlage vorgelegt. Die Mischung wird bei 120°C aufgeschmolzen und mit 2,8 g (0,07 mol) Natriumhydroxid sowie 7,1 g Vulkanox® BHT von Bayer versetzt. Dann wird ein Vakuum von 2000 Pa angelegt und langsam weiter aufgeheizt. Ab 155°C wird Phenol bei leichtem Rücklauf abdestilliert. Wenn die Temperatur 195°C erreicht hat, wird das Vakuum bis auf 300 Pa abgesenkt. 75 Minuten nach Anlegen des Vakuums haben sich 756 g Phenol gebildet und die Phenolbildung kommt zum Stillstand. Es wird 20 Minuten nachgerührt und dann auf ca. 120°C abgekühlt und mit N₂ belüftet. Das Rohprodukt wird auf ein Blech gegossen, wo es beim Abkühlen zu 1.407 g eines hellbraunen Feststoffes kristallisiert. Das Rohprodukt wird aus 1.000 ml Ethanol umkristallisiert.
- Ausbeute:: 953 g (68 %) fast weißes Pulver
- Schmelzpunkt:: 128 - 132°C
- NH₂-Gehalt:: 8,6 %

### Beispiele 2 bis 13

### EP-Harzprüflinge und Prüfergebnisse

### Beschreibung der Herstellung von EP-Harz-Prüflingen:

100 Gew.-Teile eines Epoxidharzes auf der Basis Bisphenol A mit einem Epoxidäquivalent von 180 g werden mit den entsprechenden Gewichtsteilen Härter bzw. Härtergemisch und weiteren Additiven gemäß Tabelle 2 versetzt und unter Rühren und leichter Erwärmung 5 Minuten homogenisiert.

Dicyandiamid wird 10 gew.-%ig in DMF/Methoxypropylacetat (1:1) und Methylimidazol 20 gew.-%ig in Methanol als Lösung eingesetzt.

Die Mischungen wurden 5 bis 10 Minuten bei 100°C unter Rühren entgast, und danach 1 Stunde bei 140°C und 1 Stunde bei 160°C gehärtet. Alle Arbeiten erfolgten in flachen Alu-Einwegschälchen.

### Beschreibung der Prüfungen:

Die Verarbeitbarkeit der Harzformulierungen wurde durch Bestimmung der B-Zeit (Beginn des Fadenziehens) auf einer temperierten Stahlplatte charakterisiert. Hierzu werden einige Tropfen einer Harzformulierung in die Vertiefung einer auf 140°C, 160°C oder 180°C temperierten Stahlplatte gegeben. Im Abstand von einigen Sekunden taucht man ein die Reaktion nicht beeinflussendes Holz- oder Metallstäbchen in die Harzmischung ein und zieht es wieder heraus. Haftet ein Harzfaden am Stäbchen, der nicht mehr abtropft, hat die Vernetzungsreaktion eingesetzt. Die Zeit bis zur einsetzenden Aushärtung wird hier als B-Zeit definiert.

Die Härtungsreaktionen der Harzformulierungen wurden mit der dynamischen Wärmestrom-Differentialkalorimetrie oder DSC (20°C bis 300°C, Aufheizrate: 10°C/min) verfolgt, wobei in der Tabelle Onset- und Peak-Temperatur der Härtung aufgeführt sind.

Beim ausgehärteten Harz wurde die Glasübergangstemperatur T_{G} bestimmt. Hierzu wurden Proben der ausgehärteten Harze mit der DSC untersucht, wobei der Wert des zweiten Durchgangs herangezogen wurde. Jeder Durchgang wurde von - 100°C bis 200°C gefahren. Die Aufheizrate war 10°C/min.

Zur Ermittlung der Flammhemmung wurden LOI-Werte in Anlehnung an ASTM D 2863 gemessen. Die LOI-Werte geben die Sauerstoffkonzentration eines Sauerstoff/Stickstoffgemisches an, bei der die Verbrennung eines Werkstoffes gerade noch unterstützt wird. Hierfür wurden Proben der ausgehärteten Harzformulierungen verwendet.

Gelbwerte wurden mit einem Chromameter von Minolta bestimmt. Hierfür wurden die klaren, ausreagierten Harzproben mit gleicher Dicke von ca. 1,2 mm auf der Standardweiss-Farbfläche des Gerätes vermessen.

Der Gewichtsverlust des gehärteten Harzes wurde mit der Thermogravimetrie (TGA) bestimmt. Thermogravimetrie ist ein Verfahren der Thermoanalyse, bei dem die Masse oder Massenänderung einer Probe in Abhängigkeit von der Temperatur oder der Zeit bei Verwendung eines kontrollierten Temperaturprogramms gemessen wird. Man benutzt dazu eine sogenannte Thermowaage, die es erlaubt, das Gewicht einer Probe in einer definierten Atmosphäre während des Aufheizvorgangs kontinuierlich als Funktion der Temperatur oder der Zeit zu verfolgen und zu registrieren. Für die Messungen wurden Proben der ausgehärteten Harzformulierungen verwendet. Der Aufheizbereich erstreckte sich von 25°C bis 400°C. Die Aufheizrate betrug 10°C/min. In der Tabelle angegeben ist der prozentuale Gewichtsverlust, der bei 300°C und bei 400°C gemessen wurde.

Die Phosphor- und Stickstoffgehalte der Harze wurden anhand der idealisierten Formeln der Einsatzstoffe berechnet.

**Tabelle 1**

| **Rezepturbestandteile und Prüfergebnisse** | **Härtung mit Dicyandiamid** | | | | **Härtung mit Arylphosphat Typ I** | | | | **Härtung mit Dicyandiamid und Arylphosphat Typ II** | | | |
|---|---|---|---|---|---|---|---|---|---|---|---|---|
| **Beispiele** | **2*** | **3*** | **4*** | **5*** | **6*** | **7** | **8** | **9** | **10*** | **11** | **12** | **13** |
| Epoxy-Novolak | 100,0 | 100,0 | 100,0 | 100,0 | 100,0 | 100,0 | 100,0 | 100,0 | 100,0 | 100,0 | 100,0 | 100,0 |
| Dicyandiamid (10%ig in DMF/Methoxypropylac.) | 1,5 | 1,5 | 1,5 | 1,5 | | | | | 0,8 | 0,8 | 0,8 | 0,8 |
| Methylimidazol (20%ig in Methanol) | 0,8 | 0,8 | 0,8 | 0,8 | 0,8 | 0,8 | 0,8 | 0,8 | 0,8 | 0,8 | 0,8 | 0,8 |
| Methylethylketon als Verdünner | 25,0 | 25,0 | 25,0 | 25,0 | 25,0 | 25,0 | 25,0 | 25,0 | 25,0 | 25,0 | 25,0 | 25,0 |
| Aminophenylphosphat-Beispiel 1 =Arylphosphat Typ I | | | | | 50,0 | 50,0 | 50,0 | 50,0 | 25,0 | 25,0 | 25,0 | 25,0 |
| Bisphenol-A bis-(dixylenylphosphat) =Arylphosphat Typ II | | 10,0 | | | | 10,0 | | | | 10,0 | | |
| Fyrolflex BDP® (Bisphenol-A bis-(diphenyl)-phosphat) =Arylphosphat Typ II | | | 10,0 | | | | 10,0 | | | | 10,0 | |
| Disflamoll DPK® (Diphenylkresylphosphat) =Arylphosphat Typ II | | | | 10,0 | | | | 10,0 | | | | 10,0 |
| B-Zeit bei 140°C (min) | 3,5 | >35,0 | >35,0 | >35,0 | 15,5 | 17,0 | 19,5 | 20,0 | 24,0 | 27,0 | 30,0 | 29,0 |
| B-Zeit bei 160°C (min) | 1,8 | 35,0 | 38,0 | >38,0 | 6,0 | 6,5 | 8,0 | 9,8 | 9,0 | 10,0 | 11,0 | 11,5 |
| B-Zeit bei 180°C (min) | 1,0 | 14,0 | 19,0 | 21,0 | 2,3 | 2,5 | 2,8 | 3,5 | 4,0 | 4,5 | 5,5 | 6,0 |
| Reaktionsbeginn/ Onset aus DSC (°C) | 134,6 | 143,4 | 159,2 | 156,5 | 144,8 | 142,5 | 142,1 | 144,1 | 145,5 | 147,1 | 149,2 | 147,4 |
| Reaktionsmaximum/ Peak aus DSC (°C) | 146,7 | 190,6 | 193,9 | 190,1 | 183,1 | 183,9 | 185,1 | 184,5 | 187,7 | 190,0 | 190,7 | 190,1 |
| Gewichtsverlust bei 300°C aus TGA (%) | 3,2 | 2,6 | 5,7 | 3,4 | 3,1 | 3,2 | 2,8 | 5,0 | 3,6 | 3,3 | 3,4 | 4,0 |
| Gewichtsverlust bei 400°C aus TGA (%) | 12,6 | 24,3 | 28,1 | 25,9 | 32,6 | 34,2 | 33,9 | 35,2 | 33,1 | 35,7 | 33,6 | 34,3 |
| LOI-Werte der EP-Rezepturen | 23,5 | 21,5 | 20,5 | 23,0 | 24,0 | 25,0 | 24,2 | 25,2 | 24,0 | 25,0 | 23,5 | 23,6 |
| Gelbwert | 64,4 | 118,1 | 111,1 | 134,5 | 72,1 | 60,6 | 64,8 | 66,2 | 85,8 | 99,7 | 84,5 | 79,8 |
| Glasübergangstemp. 2. Durchgang DSC (°C) | 145,5 | 63,5 | 76,2 | 71,1 | 154,5 | 140,3 | 140,8 | 132,6 | 156,9 | 138,4 | 144,5 | 132,2 |
| Phosphorgehalt, berechnet (%) | 0,0 | 0,7 | 0,8 | 0,8 | 2,9 | 3,2 | 3,2 | 3,2 | 1,7 | 2,1 | 2,2 | 2,2 |
| Stickstoffgehalt, | 1,2 | 1,1 | 1,1 | 1,1 | 2,8 | 2,6 | 2,6 | 2,6 | 2,2 | 2,0 | 2,0 | 2,0 |
| berechnet (%) | | | | | | | | | | | | |
| Erläuterung: | | | | | | | | | | | | |
| Vergleichsbeispeile sind mit einem "*" bezeichnet. | | | | | | | | | | | | |

Die Versuche belegen, dass sich bei Epoxidharzen mit einer Kombination aus Arylphosphat Typ I (Aminophenylphosphat-Beispiel 1, Hauptkomponente Bis-(3-aminophenyl)-phenylphosphat) und Arylphosphat Typ II wie in Beispiele 7 bis 9:
- höhere LOI-Werte erreichen lassen als mit dem industriell häufig eingesetzten Dicyandiamid (nachfolgend "Standardsystem" genannt), dargestellt in Beispiel 2; die LOI-Werte sind auch dann höher, wenn das Standardsystem die gleichen Mengen die Arylphosphate Typ II enthält (dargestellt in Beispiele 3 bis 5);
- eine geringere Verfärbung nach dem Ausreagieren einstellt als bei einem Standardsystem, das die gleichen Mengen die Arylphosphate Typ II enthält;
- höhere Glaspunkte erzielen lassen als bei einem Standardsystem, das die gleichen Mengen die Arylphosphate Typ II enthält; und
- höhere Phosphor- und Stickstoffgehalte, die für eine Flammwidrigkeit erforderlich sind, erreichen lassen, ohne bei den Glaspunkten einzubrechen, als bei einem Standardsystem, das die gleichen Mengen die Arylphosphate Typ II enthält.

Beispiele 10 bis 13 belegen, das sich die Arylphosphate Typ I (Aminophenylphosphat-Beispiel 1, Hauptkomponente Bis-(3-aminophenyl)-phenylphosphat) auch in Kombination mit dem Standardhärter Dicyandiamid gut verwenden lassen. Zusammen mit den Arylphosphaten Typ II erhält man bei den LOI-Werten, Glaspunkten, Gelbwerten und Phosphor- und Stickstoffgehalten Werte, die über denen des Standardsystems mit gleichen Mengen an die Arylphosphate Typ II liegen (vergleiche hierzu Beispiele 3 bis 5 mit Beispiele 11 bis 13).

### Beispiele 14 bis 16

### Epoxy/Glasfaserlaminat-Prüfkörper und Prüfergebnisse

### Beschreibung der Herstellung von Laminatprüfkörpern:

Neben den Prüfkörpern, die aus gehärteten Epoxyharz-Formulierungen nach den in Tabelle 1 angegebenen Rezepturen gewonnen wurden, wurden auch Glasfaserlaminate auf Basis von Epoxyharzen hergestellt und untersucht.

Hierfür werden zuerst die in Tabelle 2 aufgeführten Harzformulierungen als verarbeitbares Tränkharz zubereitet. Das Harz wird vorgelegt. Durch Zugabe von Methylethylketon wird die Viskosität erniedrigt und das Lösen von Flammschutzmittel, Härter, Aktivator und weiteren Zuschlagstoffen erleichtert. Es ist unbedingt darauf zu achten, dass eine völlig klare, homogene Tränkharz-Mischung erhalten wird, die zügig weiterverarbeitet wird.

Es hat sich als hilfreich für die Verarbeitung der Tränkharze herausgestellt, vorher ihren Reaktions/Härtungsverlauf mit DSC und ihre B-Zeit zu bestimmen.

Das Tränkharz wird in einer Wanne vorgelegt. Die Viskosität wurde mit Methylethylketon so eingestellt, dass nach dem Tränken, Ablaufen oder erforderlichenfalls Abstreifen der Lösung von den Glasfasermatten, Entfernen der Lösemittel und Überführen in den B-Zustand ein Harzanteil von ca. 50 Gew.-% im Prepreg gegeben ist.

Die Glasfilamentgewebe US-Style 7628 mit Silan-Misch-Finish von CS-Interglas haben etwa DIN A4-Format. Sie werden in der Wanne getränkt, abgestreift und im Ex-Vacuumofen bei 140°C getrocknet und in den B-Zustand (lösemittelfrei, trocken, nicht mehr klebrig) überführt. Dabei darf keine Blasenbildung auftreten. Durch Auswiegen (Gewicht Prepreg - Gewicht Gewebe = Gewicht Harz) wird der Harzgehalt kontrolliert.

Zur Herstellung eines Laminates werden je 8 Prepregs zu einem etwa 1,6 mm dicken Verbund verpresst (Ein Prepreg ist eine Bezeichnung für Fasermatten, die aus Glasfasern oder -filamenten bestehen und mit wärmehärtbaren Harzen imprägniert sind; diese preimpregnierten Matten können unter Formgebung durch Warm- oder Kaltpressen weiterverarbeitet werden, u.a. zu Formteilen oder Halbzeug). Das Pressen erfolgt mehrstufig. Zuerst wird das Material 5 Minuten fast drucklos (d.H. bei von 0 Pa bis 500.000 Pa) vorgewärmt. Dann wird innerhalb von etwa 5 bis 10 Minuten der Pressdruck auf 3 MPa erhöht und schließlich 1 Stunde bei 160°C ausgehärtet.

Aus den Laminaten werden mit einem hochtourigen, hartmetallbestücktem Sägeblatt Prüfkörper mit dem Format von ca. 125 x 12,5 x 1,6 mm herausgesägt.

### Beschreibung der Prüfungen:

Die Verarbeitbarkeit wurde durch Bestimmung der B-Zeit (Beginn des Fadenziehens) auf einer temperierten Stahlplatte charakterisiert.

Die Härtungsreaktion des Harzes wurde mit der DSC (20°C bis 300°C, Aufheizrate 10°C/min) verfolgt, wobei in der Tabelle Onset- und Peak-Temperatur der Härtung aufgeführt sind.

Beim ausgehärteten Harz bzw. Laminat wurde die Glasübergangstemperatur T_{G} bestimmt, wobei der Wert des zweiten Durchgangs von -100°C bis 200°C bei einer Aufheizrate von 10°C/min herangezogen wurde.

Die Feuchtigkeitsempfindlichkeit und die thermische Belastbarkeit der Laminate wurden durch Lagern von Prüfkörpern in gesättigter Wasserdampf-Atmosphäre über 20 Minuten bei ca. 116°C (nachfolgend "Pressure Cooker Test") und unmittelbar danach durch Eintauchen für mindestens 6 Sekunden in ein ca. 260°C heißes Lötbad geprüft (nachfolgend "Lotbadtest").

Die Phosphor- und Stickstoffgehalte der Harze wurden anhand der idealisierten Formeln der Einsatzstoffe berechnet.

Als Brandprüfung wurde der Test nach Underwriters Laboratories Inc., UL 94 Test for Flammability of Plastic Materials for Parts in Devices and Appliances, herangezogen. Die Prüfung nach UL 94 wird sehr häufig zur Qualifizierung von flammwidrigen Werkstoffen für ihre Eignung im Elektro- und Elektronikbereich herangezogen. Für die Prüfung wurden je fünf Prüfkörper mit Abmessungen von ca. 125 x 13 x 1,6 mm aus den Epoxy/Glasfaserlaminaten gesägt. Die Prüfkörper werden senkrecht eingespannt und entsprechend den Vorgaben zwei mal 10 s mit einer Gasflamme beflammt.

Die Klassifizierung ergibt sich aus folgenden Anforderungen:

**Tabelle 2**

| Prüfkriterium | V-0 | V-1 | V-2 |
|---|---|---|---|
| Nachbrennzeit bei jedem Prüfkörper für beide Beflammungen | ≤10 s | ≤10 s | ≤10 s |
| Gesamtnachbrennzeit aller 5 Prüfkörper für beide Beflammungen | ≤50 s | ≤250 s | ≤250 s |
| Nachbrenn- und Glühzeit für jeden Prüfkörper nach der 2. Beflammung | ≤30 s | ≤60 s | ≤60 s |
| Nachbrennen oder -glühen eines Prüfkörpers bis zur Halteklammer hoch | nein | nein | nein |
| Baumwollwatte wird durch abtropfende Teilchen oder Tropfen entzündet | nein | nein | ja |

**Tabelle 3**

| **Bestandteile mit Mengenangaben in Gew.-Teilen** | **Beispiele** | | |
|---|---|---|---|
| | **14*** | **15** | **16** |
| Epoxy-Novolak, semi-solid | 100,0 | 100,0 | 100,0 |
| Methylethylketon | 25,0 | 25,0 | 25,0 |
| Aminophenylphosphat-Beispiel 1 (Hauptkomponente Bis-(3-aminophenyl)-phenylphosphat) =Arylphosphate Typ I | 50,0 | 50,0 | 50,0 |
| Methylimidazol (20%ig in Methanol) | 0,8 | 0,8 | 0,8 |
| Bisphenol A-bis-(dixylenylphosphat), =Arylphosphate Typ II | | 10,0 | 10,0 |
| Aluminiumtrihydrat | | | 10,0 |
| B-Zeit bei 160°C (min) | 7,5 | 8,0 | 7,0 |
| B-Zeit bei 180°C (min) | 3,0 | 3,7 | 3,5 |
| Reaktionsbeginn/Onset aus DSC (°C) | 139,9 | 137,8 | 141,5 |
| Reaktionsmaximum/Peak aus DSC (°C) | 184,5 | 185,4 | 186,3 |
| Glasübergangstemperatur aus DSC (°C) | 146,7 | 129,9 | 137,5 |
| Pressure cooker test 20 min bei ca. 116°C | i. O. | i. O. | i. O. |
| Lötbadtest 6 s bei ca. 260°C | i. O. | i. O. | i. O. |
| Phosphorgehalt, berechnet (%) | 2,4 | 2,7 | 2,6 |
| Stickstoffgehalt, berechnet (%) | 2,6 | 2,5 | 2,3 |
| Brandprüfung nach UL 94 | n. b. | n. b. | V-1 |
| Erläuterung: | | | |
| Vergleichsbeispeile sind mit einem "*" bezeichnet. | | | |
| i. O. = in Ordnung, d. h. ohne sichtbare Schädigung des Prüflings wie etwa Blasenbildung, Delaminierung, Verfärbung etc. | | | |
| n. b. = nicht bestanden, d. h. die von der Norm limitierten Nachbrennzeiten wurden überschritten. | | | |

Die Versuche belegen, dass sich bei Epoxidharz/Glasfaserlaminaten mit einer Kombination aus Arylphosphaten Typ I (Aminophenylphosphat-Beispiel 1, Hauptkomponente Bis-(3-aminophenyl)-phenylphosphat), Arylphosphaten Typ II und Aluminiumtrihydrat die Flammwidrigkeit V-1 nach UL 94 erreichen lässt. Ohne Aluminiumtrihydrat wurde die Klassifizierung V-1 knapp verfehlt.

### Beispiel 17

Herstellung eines Aminophenylphosphats (Arylphosphate Typ I) mit ca. 11,5 % Basen-Stickstoff (nachfolgend als "Aminophenylphosphat-Beispiel 17" bezeichnet; Hauptkomponente Tris-(3-aminophenyl)-phosphat):

489 g (1,50 mol) Triphenylphosphat und 490 g (4,50 mol) 3-Aminophenol werden unter Stickstoff in einem trockenen 1-1-Vierhalskolben mit Rührer, Thermometer, 40-cm-Vigreuxkolonne mit Destillationskopf, Produktkühler (auf 48°C temperiert) und Vakuumwechselvorlage vorgelegt. Die Mischung wird bei 120°C aufgeschmolzen und mit 1,5 g (0,04 mol) Natriumhydroxid sowie 2,8 g Vulkanox BHT® von Bayer versetzt. Dann wird ein Vakuum von 2000 Pa angelegt und langsam weiter aufgeheizt. Ab 155°C wird Phenol bei leichtem Rücklauf abdestilliert. Wenn die Temperatur 195°C erreicht hat, wird das Vakuum bis auf 300 Pa abgesenkt. 75 min nach Anlegen des Vakuums haben sich 402 g Phenol gebildet und die Phenolbildung kommt zum Stillstand. Es wird 20 min nachgerührt und dann auf ca. 120°C abgekühlt und mit N₂ belüftet. Das Rohprodukt wird auf ein Blech gegossen, wo es beim Abkühlen zu 595 g eines hellbraunen Feststoffes kristallisiert. Das Rohprodukt wird aus 1000 ml Ethanol umkristallisiert.
- Ausbeute:: 357 g (60 %) beigefarbenes Pulver
- Schmelzpunkt:: 145 - 148°C
- NH₂-Gehalt:: 11,5 %

### Beispiele 18 bis 20

### Epoxy/Glasfaserlaminat-Prüfkörper und Prüfergebnisse

Die Herstellung der Laminat-Prüfkörper und ihre Prüfung erfolgte wie oben unter Beispiele 14 bis 16 beschrieben.

**Tabelle 4**

| **Bestandteile mit Mengenangaben in Gew.-Teilen** | **Beispiele** | | |
|---|---|---|---|
| | **18*** | **19** | **20** |
| Epoxy-Novolak, semi-solid | 100,0 | 100,0 | 100,0 |
| Methylethylketon | 25,0 | 25,0 | 25,0 |
| Aminophenylphosphat-Beispiel 17 (Hauptkomponente Tris-(3-aminophenyl)-phosphat =Arylphosphate Typ I | 35,0 | 35,0 | 35,0 |
| Methylimidazol (20%ig in Methanol) | 0,8 | 0,8 | 0,8 |
| Bisphenol A-bis-(dixylenylphosphat), =Arylphosphate Typ II | | 10,0 | 10,0 |
| Aluminiumtrihydrat | | | 10,0 |
| B-Zeit bei 160°C (min) | 360 | 480 | 330 |
| B-Zeit bei 180°C (min) | 105 | 150 | 135 |
| Reaktionsbeginn/Onset aus DSC (°C) | 135,9 | 143,3 | 142,2 |
| Reaktionsmaximum/Peak aus DSC (°C) | 186,5 | 189,3 | 188,6 |
| Glasübergangstemperatur aus DSC (°C) | 176,3 | 159,6 | 159,2 |
| Pressure cooker test 20 min bei ca. 116°C | i. O. | i. O. | i. O. |
| Lötbadtest 6 s bei ca. 260°C | i. O. | i. O. | i. O. |
| Phosphorgehalt, berechnet (%) | 2,1 | 2,5 | 2,4 |
| Stickstoffgehalt, berechnet (%) | 3,1 | 2,9 | 2,7 |
| Brandprüfung nach UL-94 | n. b. | V-1 | V-1 |
| Erläuterung: Vergleichsbeispeile sind mit einem "*" bezeichnet. | | | |
| i. O. = in Ordnung, d. h. ohne sichtbare Schädigung des Prüflings wie etwa Blasenbildung, Delaminierung, Verfärbung etc. | | | |
| n. b. = nicht bestanden, d. h. die von der Norm limitierten Nachbrennzeiten wurden überschritten. | | | |

Die Versuche belegen, dass sich bei Epoxidharz/Glasfaserlaminaten mit einer Kombination aus Arylphosphaten Typ I (Aminophenylphosphat-Beispiel 17, Hauptkomponente Tris-(3-aminophenyl)-phosphat) und Arylphosphaten Typ II die Flammwidrigkeit V-1 nach UL 94 erreichen lässt.

Bei Aminophenylphosphat-Beispiel 1 (Hauptkomponente Bis-(3-aminophenyl)-phenylphosphat, musste, wie die Beispiele 15 und 16 zeigen, für die Klassifizierung V-1 noch Aluminiumtrihydrat mitverwendet werden. Bei Aminophenylphosphat-Beispiel 17 (Hauptkomponente Tris-(3-aminophenyl)-phosphat) wird die Klassifizierung V-1 allein durch Kombination mit einem Arylphosphat Typ II erreicht.

## Patentansprüche

1. Arylphosphat-Mischung enthaltend Arylphosphate Typ I der allgemeinen Formel (I) 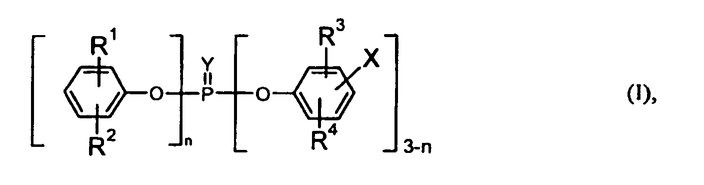 worin
R¹ bis R⁴ für Wasserstoff stehen,
Y Sauerstoff oder Schwefel bedeutet,
X NH₂ bedeutet,
und
n für 0, 1 oder 2 steht, und
Arylphosphate Typ II der allgemeinen Formel (II) 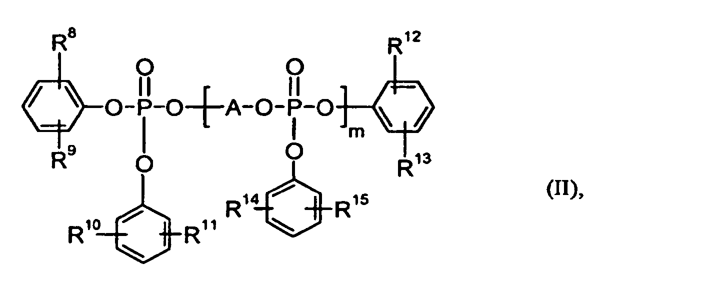 worin
R⁸ bis R¹⁵ unabhängig voneinander für Wasserstoff, Alkyl, Cycloalkyl, Alkenyl, Aralkyl oder Aryl stehen, wo das Aryl gegebenenfalls mit Alkyl substituiert sein kann,
m für 0, 1, 2 oder 3 steht, und
A für Aromaten, die mindestens zwei funktionelle Gruppen enthalten, steht.

2. Arylphosphat-Mischung nach Anspruch 1, worin für die Arylphosphate Typ II R⁵ bis R¹², unabhängig voneinander, für C₁ bis C₂₀-Alkylrest, für C₅ bis C₈₋ Cycloalkylrest, für C₂ bis C₁₂ linear oder verzweigter Alkenylrest, für C₇ bis C₁₂-Aralkylgruppen, und für C₆ bis C₁₄-Arylreste, wo die Arylreste gegebenenfalls mit C₁ bis C₄-Alkylresten substituiert sind, stehen.

3. Arylphosphat-Mischung nach Anspruch 1, worin für die Arylphosphate Typ II R⁵ bis R¹², unabhängig voneinander, für Methyl, Ethyl, Propyl, Isopropyl, n-Butyl, i-Butyl, t-Butyl, Pentyl, Hexyl, Octyl, Dodecyl, Tetradecyl, Eicosyl, Cyclopentyl, Cyclohexyl, Methylcyclohexyl, Vinyl, Prop-1-enyl, Prop-2-enyl, n-But-3-enyl, n-Pent-4-enyl, n-Hex-5-enyl, Phenyl, Naphthyl, Biphenyl, Benzyl, Methylbenzyl, Phenylethyl sein können.

4. Arylphosphat-Mischung nach Anspruch 1, worin für die Arylphosphate Typ II die Phosphate unverbrückt oder verbrückt, sind.

5. Arylphosphat-Mischung nach Anspruch 1, worin als Arylphosphate Typ II Triphenylphosphat oder Alkylphenylphosphate verwendet werden.

6. Arylphosphat-Mischung nach Anspruch 1, worin für die Arylphosphate Typ II als A ein Rest, der in Form von A(OH)₂ die Verbindung Bisphenol-A oder Resorcin darstellt, verwendet wird.

7. Arylphosphat-Mischung nach einem der Ansprüche 1 bis 6, worin die Arylphosphate Typ I in Mengen von 3 bis 98 Gew.-%, insbesondere 25 bis 88 Gew.-%, und die Arylphosphate Typ II in Mengen von 2 bis 97 Gew.-%, insbesondere 12 bis 75 Gew.-%, jeweils bezogen auf die Summe von Arylphosphaten Typ I und Arylphospaten Typ II, gemischt werden.

8. Arylphosphat-Mischung nach einem der Ansprüche 1 bis 7, worin die Mischung von 70 bis 100 Gew.-%, insbesondere 95 bis 100 Gew-% Arylphosphate Typ I und Arylphosphate Typ II, bezogen auf die Mischung, enthält.

9. Verfahren zur Herstellung von Mischungen gemäß Anspruch 1, **dadurch gekennzeichnet, dass** Arylphosphate Typ I der allgemeinen Formel (I) 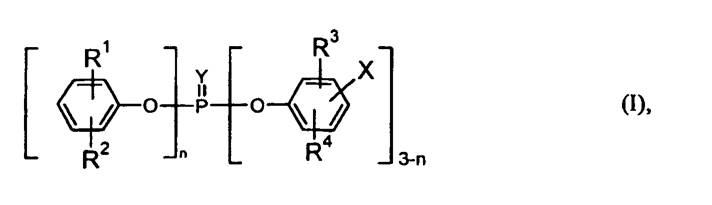 worin R¹ bis R⁴, Y, X und n die in Anspruch 1 angegebene Bedeutung haben, und
Arylphosphate Typ II der allgemeinen Formel (II) 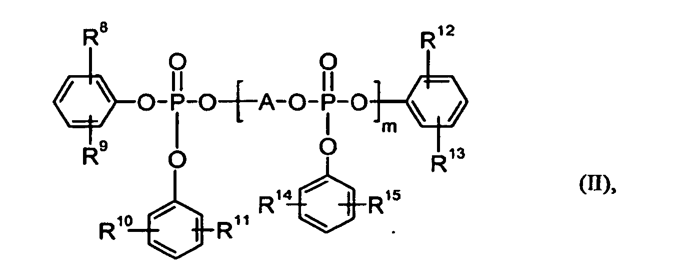 worin R⁸ bis R¹⁵, A und m die in Anspruch 1 angegebene Bedeutung haben, gemischt werden.

10. Verfahren zur Herstellung von mit Flammschutzmittel ausgerüsteten Polymeren, **dadurch gekennzeichnet, dass** man entweder die Arylphosphat-Mischung nach wenigstens einem der Ansprüche 1 bis 8 oder die Arylphosphate Typ I und II separat in das Polymer einarbeitet.

11. Verfahren zur Herstellung von mit Flammschutzmittel ausgerüsteten Polymeren gemäß Anspruch 10, **dadurch gekennzeichnet, dass** die Arylphosphat-Mischung in das Polymer in Mengen von 2 bis 80 Gew.-%, insbesondere von 10 bis 50 Gew.-%, bezogen auf das Polymer, eingearbeitet wird.

12. Verfahren zur Herstellung von mit Flammschutzmittel ausgerüsteten Polymeren gemäß Anspruch 10, **dadurch gekennzeichnet, dass** die Arylphosphate Typ I in Mengen von 1 bis 50 Gew.-%, insbesondere von 5 bis 35 Gew.-%, und die Arylphosphate Typ II in Mengen von 1 bis 30 Gew.-%, insbesondere von 5 bis 15 Gew.-%, bezogen auf die Polymere, separat in das Polymer eingearbeitet werden.

13. Verfahren zur Herstellung von mit Flammschutzmittel ausgerüsteten Polymeren gemäß Anspruch 10, **dadurch gekennzeichnet, dass** die Arylphosphat-Mischung bzw. Arylphosphate Typ I und II separat in die Polymere bei einer Temperatur von 20°C bis 200°C, insbesondere von 20°C bis 80°C, eingearbeitet werden.

14. Verfahren zur Herstellung von mit Flammschutzmittel ausgerüsteten Polymeren gemäß Anspruch 13, **dadurch gekennzeichnet, dass** das Polymer ein Epoxidharz ist.

15. Verfahren zur Herstellung von mit Flammschutzmittel ausgerüsteten Härtermischungen für Epoxidharze, **dadurch gekennzeichnet, dass** Mengen an Arylphosphat-Mischung gemäß einer der Ansprüche 1 bis 8 von 10 bis 100 Gew.-%, insbesondere 50 bis 100 Gew.-% und Mengen an Anhydrid- bzw. Aminhärter von 0 bis 90 Gew.-%, insbesondere von 0 bis 50 Gew.-%, wobei die Summe der Gew.-%e von der Arylphosphat-Mischung und der Anhydrid bzw. Aminhärter bezogen auf die Härtermischungen 100 Gew.-% ergeben muss, umgesetzt werden.

16. Verwendung der Arylphosphat-Mischungen gemäß einem der Ansprüche 1 bis 8 als Flammschutzmittel für Polymere.

17. Verwendung gemäß Anspruch 16, **dadurch gekennzeichnet, dass** als Polymere Epoxidharze eingesetzt werden.

18. Polymerverbindung, erhältlich durch Umsetzung von Polymeren, insbesondere Epoxyharzen, mit der Arylphosphat-Mischung aus einem der Ansprüche 1 bis 8 oder separat mit den Arylphosphaten der Formel I und II.

19. Polymere enthaltend eine Arylphosphat-Mischung nach einem der Ansprüche 1 bis 8.

## Claims

1. Aryl phosphate mixture comprising aryl phosphates type I of the general formula (I) 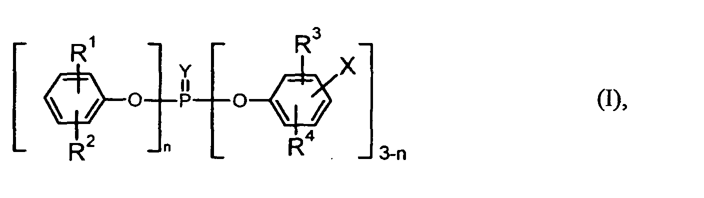 where
R¹ to R⁴ are hydrogen,
Y is oxygen or sulphur,
X is NH₂,
and
n is 0, 1 or 2, and
aryl phosphates type II of the general formula (II) 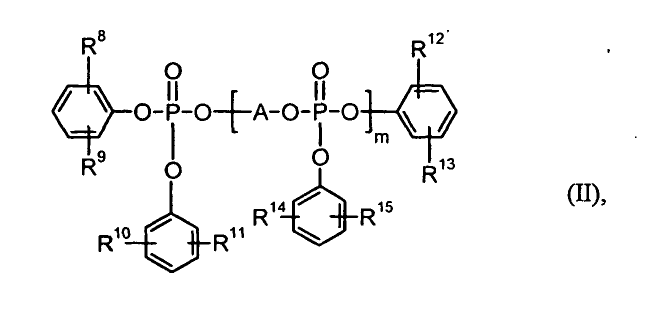 where
R⁸ to R¹⁵, independently of one another, are hydrogen, alkyl, cycloalkyl, alkenyl, aralkyl or aryl, where the aryl moiety may be unsubstituted or have alkyl substitution,
m is 0, 1, 2 or 3 and
A is aromatics which contain at least two functional groups.

2. Aryl phosphate mixture according to Claim 1, where for the aryl phosphates type II R⁵ to R¹², independently of one another, are a C₁-C₂₀-alkyl radical, a C₅-C₈₋cycloalkyl radical, a linear or branched C₂-C₁₂-alkenyl radical, a C₇-C₁₂-aralkyl group, or a C₆-C₁₄-aryl radical, where the aryl radical may be unsubstituted or have substitution by C₁-C₄-alkyl radicals.

3. Aryl phosphate mixture according to Claim 1, where for the aryl phosphates type II R⁵ to R¹², independently of one another, may be methyl, ethyl, propyl, isopropyl, n-butyl, isobutyl, tert-butyl, pentyl, hexyl, octyl, dodecyl, tetradecyl, eicosyl, cyclopentyl, cyclohexyl, methylcyclohexyl, vinyl, prop-1-enyl, prop-2-enyl, n-but-3-enyl, n-pent-4-enyl, n-hex-5-enyl, phenyl, naphthyl, biphenyl, benzyl, methylbenzyl, phenylethyl.

4. Aryl phosphate mixture according to Claim 1, where for the aryl phosphates type II the phosphates are unbridged or bridged.

5. Aryl phosphate mixture according to Claim 1, where use is made of triphenyl phosphate or alkylphenyl phosphates as aryl phosphates type II.

6. Aryl phosphate mixture according to Claim 1, where a radical which in the form of A(OH)₂ is the compound bisphenol A or resorcinol is used as A for the aryl phosphates type II.

7. Aryl phosphate mixture according to any of Claims 1 to 16, where the amounts mixed of the aryl phosphates type I are from 3 to 98% by weight, in particular from 25 to 88% by weight, and the amounts mixed of the aryl phosphates type II are from 2 to 97% by weight, in particular from 12 to 75% by weight, based in each case on the entirety of aryl phosphates type I and aryl phosphates type II.

8. Aryl phosphate mixture according to any of Claims 1 to 17, where the mixture comprises from 70 to 100% by weight, in particular from 95 to 100% by weight, of aryl phosphates type I and aryl phosphates type II, based on the mixture.

9. Process for preparing mixtures according to Claim 1, **characterized in that** aryl phosphates type I of the general formula (I) 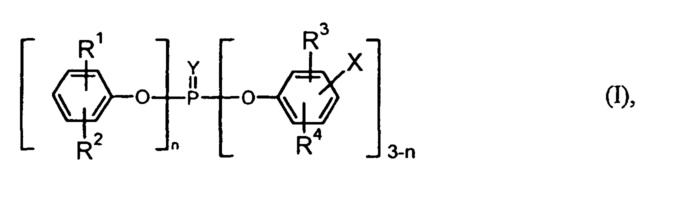 where R¹ to R⁴, Y, X and n are as defined in Claim 1, and
aryl phosphates type II of the general formula (II) 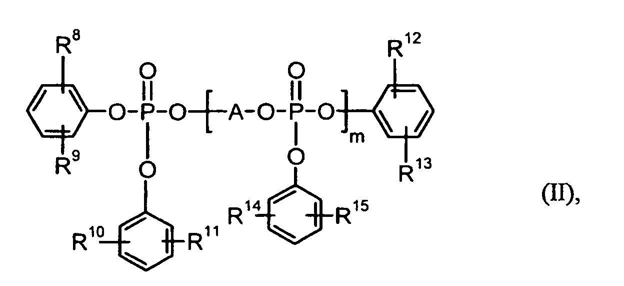 where R⁸ to R¹⁵, A and m are as defined in Claim 1, are mixed.

10. Process for preparing polymers provided with flame retardant, **characterized in that** either the aryl phosphate mixture according to at least one of Claims 1 to 8 or the aryl phosphates type I and II is/are separately incorporated into the polymer.

11. Process for preparing polymers provided with flame retardant according to Claim 10, **characterized in that** the amounts of the aryl phosphate mixture incorporated into the polymer are from 2 to 80% by weight, in particular from 10 to 50% by weight, based on the polymer.

12. Process for preparing polymers provided with flame retardant according to Claim 10, **characterized in that** amounts of from 1 to 50% by weight, in particular from 5 to 35% by weight, of the aryl phosphates type I and amounts of from 1 to 30% by weight, in particular from 5 to 15% by weight, of the aryl phosphates type II, based on the polymers, are incorporated separately into the polymer.

13. Process for preparing polymers provided with flame retardant according to Claim 10, **characterized in that** the aryl phosphate mixture or aryl phosphates type I and II is/are separately incorporated into the polymers at a temperature of from 20 to 200°C, in particular from 20 to 80°C.

14. Process for preparing polymers provided with flame retardant according to Claim 13, **characterized in that** the polymer is an epoxy resin.

15. Process for preparing hardener mixtures provided with flame retardant for epoxy resins, **characterized in that** amounts of from 10 to 100% by weight, in particular from 50 to 100% by weight, of aryl phosphate mixture according to any of Claims 1 to 8 and amounts of from 0 to 90% by weight, in particular from 0 to 50% by weight, of anhydride hardener or of amine hardener, are reacted, where the total of the % by weight of the aryl phosphate mixture and of the anhydride hardener or amine hardener has to be 100% by weight, based on the hardener mixtures.

16. Use of the aryl phosphate mixtures according to any of Claims 1 to 8 as flame retardants for polymers.

17. Use according to Claim 16, **characterized in that** epoxy resins are used as polymers.

18. Polymer compound obtainable by reacting polymers, in particular epoxy resins, with the aryl phosphate mixture of any of Claims 1 to 8 or separately with the aryl phosphates of the formulae I and II.

19. Polymers comprising an aryl phosphate mixture according to any of Claims 1 to 8.

## Revendications

1. Mélange de phosphates d'aryle contenant des phosphates d'aryle de type I de formule générale (I) 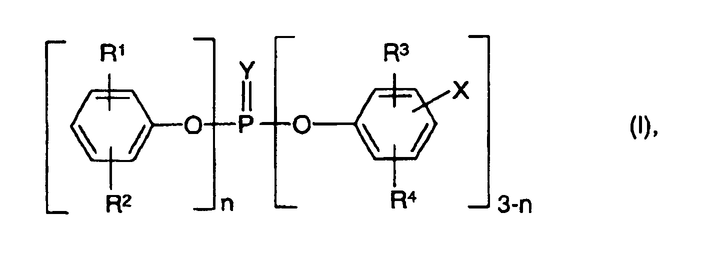 où
R¹ à R⁴ représentent l'hydrogène,
Y représente l'oxygène ou le soufre,
X représente NH₂,
et
n représente 0, 1 ou 2, et
des phosphates d'aryle de type II de formule générale (II) 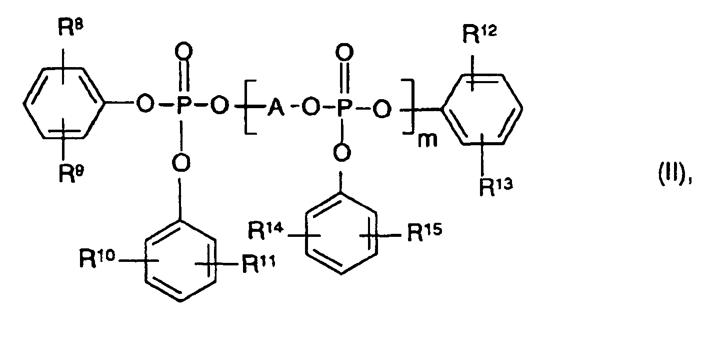 où
R⁸ à R¹⁵ représentent indépendamment les uns des autres l'hydrogène, alkyle, cycloalkyle, alcényle, aralkyle ou aryle, où l'aryle peut éventuellement être substitué par alkyle,
m représente 0, 1, 2 ou 3, et
A représente des aromatiques qui contiennent au moins deux groupes fonctionnels.

2. Mélange de phosphates d'aryle selon la revendication 1 où, pour les phosphates d'aryle de type II, R⁵ à R¹², indépendamment les uns des autres, représentent un groupement C₁ à C₂₀-alkyle, un groupement C₅ à C₈-cycloalkyle, un groupement C₂ à C₁₂-alcényle linéaire ou ramifié, des groupes C₇ à C₁₂-aralkyle, et des groupements C₆ à C₁₄-aryle, où les groupements aryle sont éventuellement substitués par des groupements C₁ à C₄-alkyle.

3. Mélange de phosphates d'aryle selon la revendication 1 où, pour les phosphates d'aryle de type II, R⁵ à R¹², indépendamment les uns des autres, peuvent être méthyle, éthyle, propyle, isopropyle, n-butyle, i-butyle, t-butyle, pentyle, hexyle, octyle, dodécyle, tétradécyle, éicosyle, cyclopentyle, cyclohexyle, méthylcyclohexyle, vinyle, prop-1-ényle, prop-2-ényle, n-but-3-ényle, n-pent-4-ényle, n-hex-5-ényle, phényle, naphtyle, biphényle, benzyle, méthylbenzyle, phényléthyle.

4. Mélange de phosphates d'aryle selon la revendication 1 où, pour les phosphates d'aryle de type II, les phosphates sont non pontés ou pontés.

5. Mélange de phosphates d'aryle selon la revendication 1, où le phosphate de triphényle ou des phosphates d'alkyle et de phényle sont utilisés comme phosphates d'aryle de type II.

6. Mélange de phosphates d'aryle selon la revendication 1 où, pour les phosphates d'aryle de type II, un groupement qui représente, sous forme de A(OH)₂, le composé bisphénol A ou la résorcine, est utilisé comme A.

7. Mélange de phosphates d'aryle selon l'une des revendications 1 à 6, où les phosphates d'aryle de type I sont mélangés en des quantités de 3 à 98 % en masse, en particulier de 25 à 88 % en masse, et les phosphates d'aryle de type II sont mélangés en des quantités de 2 à 97 % en masse, en particulier de 12 à 75 % en masse, dans chaque cas par rapport à la somme des phosphates d'aryle de type I et des phosphates d'aryle de type II.

8. Mélange de phosphates d'aryle selon l'une des revendications 1 à 7, où le mélange contient de 70 à 100 % en masse, en particulier 95 à 100 % en masse de phosphates d'aryle de type I et de phosphates d'aryle de type II, par rapport au mélange.

9. Procédé de production de mélanges selon la revendication 1, **caractérisé en ce que** des phosphates d'aryle de type I de formule générale (I) 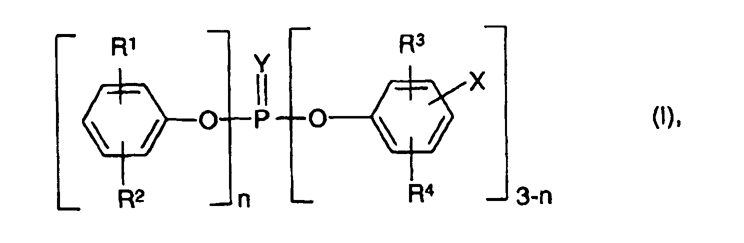 où R¹ à R⁴, Y, X et n ont la signification indiquée dans la revendication 1, et
des phosphates d'aryle de type II de formule générale (II) 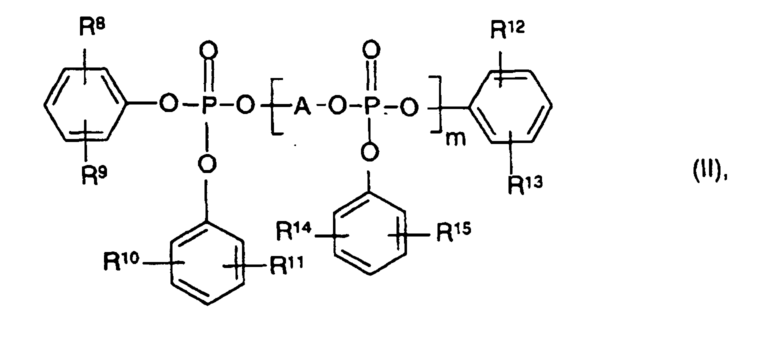 où R⁸ à R¹⁵, A et m ont la signification indiquée dans la revendication 1, sont mélangés.

10. Procédé de production de polymères munis d'ignifugeant, **caractérisé en ce que** l'on incorpore dans le polymère le mélange de phosphates d'aryle selon au moins l'une des revendications 1 à 8 ou, séparément, les phosphates d'aryle de types I et II.

11. Procédé de production de polymères munis d'ignifugeant selon la revendication 10, **caractérisé en ce que** le mélange de phosphates d'aryle est incorporé dans le polymère en des quantités de 2 à 80 % en masse, en particulier de 10 à 50 % en masse, par rapport au polymère.

12. Procédé de production de polymères munis d'ignifugeant selon la revendication 10, **caractérisé en ce que** les phosphates d'aryle de type I sont incorporés dans le polymère en des quantités de 1 à 50 % en masse, en particulier de 5 à 35 % en masse, et les phosphates d'aryle de type II sont incorporés séparément dans le polymère en des quantités de 1 à 30 % en masse, en particulier de 5 à 15 % en masse, par rapport aux polymères.

13. Procédé de production de polymères munis d'ignifugeant selon la revendication 10, **caractérisé en ce que** le mélange de phosphates d'aryle est incorporé dans les polymères ou les phosphates d'aryle de type I et II sont incorporés séparément dans les polymères à une température de 20°C à 200°C, en particulier de 20°C à 80°C.

14. Procédé de production de polymères munis d'ignifugeant selon la revendication 13, **caractérisé en ce que** le polymère est une résine époxyde.

15. Procédé de production de mélanges durcisseurs munis d'ignifugeant pour résines époxyde, **caractérisé en ce que** des quantités de mélange de phosphates d'aryle selon l'une des revendications 1 à 8 de 10 à 100 % en masse, en particulier de 50 à 100 % en masse et des quantités de durcisseurs anhydride ou amine de 0 à 90 % en masse, en particulier de 0 à 50 % en masse, où la somme des % en masse du mélange de phosphates d'aryle et des durcisseurs anhydride ou amine par rapport aux mélanges durcisseurs doit donner 100 % en masse, sont mises à réagir.

16. Utilisation des mélanges de phosphates d'aryle selon l'une des revendications 1 à 8 comme ignifugeants pour polymères.

17. Utilisation selon la revendication 16, **caractérisée en ce que** des résines époxyde sont utilisées comme polymères.

18. Composé polymère pouvant être obtenu par réaction de polymères, en particulier de résines époxyde, avec le mélange de phosphates d'aryle selon l'une des revendications 1 à 8 ou séparément avec les phosphates d'aryle des formules I et II.

19. Polymères contenant un mélange de phosphates d'aryle selon l'une des revendications 1 à 8.
